# EUROPÄISCHE PATENTSCHRIFT

(11) **EP 1 924 769 B1**
(45) Veröffentlichungstag und Bekanntmachung des Hinweises auf die Patenterteilung: **01.02.2012**
(21) Anmeldenummer: 06793053.7
(22) Anmeldetag: 29.08.2006
(51) Int. Cl.: F02M 35/12, F02M 35/16, B60T 17/20

(54) **RESONATOR**
RESONATOR
RESONATEUR

(30) Priorität: 16.09.2005 DE 202005014688 U
(43) Veröffentlichungstag der Anmeldung: 28.05.2008
(73) Patentinhaber: Mann + Hummel GmbH, 71638 Ludwigsburg (DE)
(72) Erfinder: MAYER, Gerhard, 74385 Pleidelsheim (DE); FRITZSCHING, Torsten, 71665 Vaihingen (DE)
(86) Internationale Anmeldenummer: PCT/EP2006/065768
(87) Internationale Veröffentlichungsnummer: WO 2007/031401

(56) Entgegenhaltungen:
- DE-A1- 4 435 296
- DE-A1- 10 036 588
- DE-A1- 10 058 479
- DE-T2- 60 017 075
- JP-A- 2005 264 886
- US-A- 5 756 945

## Beschreibung

### Technisches Gebiet

Die Erfindung betrifft einen Resonator für ein Lufteinlasssystem einer Kraftfahrzeug-Brennkraftmaschine, mit einem Gehäuse und mit mindestens einem von dem Gehäuse umschlossenen Resonatorraum, wobei in dem Gehäuse mindestens eine Lufteintrittsöffnung und mindestens eine Luftaustrittsöffnung für den Resonatorraum vorgesehen sind. Des Weiteren betrifft die Erfindung ein Ansaugleitung-Resonator-Zusatzaggregat-System für eine Kraftfahrzeug-Brennkraftmaschine.

### Stand der Technik

Es ist wünschenswert, dass in Kraftfahrzeugen Lufteinlasssysteme zum Einsatz kommen, die ein Minimum an Schallenergie produzieren. Schallenergie wird produziert, wenn Frischluft durch eine Ansaugleitung in die Brennkraftmaschine gesaugt wird. Durch die zugeführte Luft werden Vibrationen in der Ansaugleitung hervorgerufen, was unerwünschte Schallemissionen verursacht. Es ist bekannt, verschiedene Arten von Resonatoren, beispielsweise Helmholtz-Resonatoren, einzusetzen, um den Ansauglärm der Brennkraftmaschine zu reduzieren. Resonatoren minimieren Vibrationen dadurch, dass die Luft innerhalb des Resonators mit der vibrierenden Ansaugluft in Resonanz gebracht wird.

Aus der DE 600 17 075 T2 ist ein Resonator bekannt. Der Resonator besteht im Wesentlichen aus einem Gehäuse, welches einen großvolumigen Resonatorraum umschließt. Über eine Luftleitung ist der Resonatorraum mit einer Ansaugleitung eines Lufteinlasssystems einer Kraftfahrzeug-Brennkraftmaschine verbunden. Über die Luftleitung kommuniziert ein Teilvölumenstrom der Ansaugleitung mit der Luft im Resonatorraum. Aufgrund der auftretenden Resonanzschwingungen werden Vibrationen im Ansaugleitung reduziert, was zu geringeren Geräuschemissionen führt. Nachteilig bei dem bekannten Resonator ist der große Raumbedarf aufgrund des großvolumigen Resonatorraums.

Die Schrift DE 100 58 479 A1 zeigt einen Breitbanddämpfer für die Ansaugluft einer Brennkraftmaschine zur Dämpfung des Ansauggeräusches eines Verdichters mit einem Leitungsabschnitt, der mit einem Resonanzkammervolumen verbunden ist.

Aus dem Dokument DE 100 36 588 A1 ist eine Schalldämpfeinrichtung bekannt für einen Dieselmotor mit Abgasturbolader. Die Schalldämpfeinrichtung besteht aus einem Ringspaltresonator zwischen Verdichter und Ladeluftkühler, der die entgegen der Luftströmung der Ansauganlage laufenden Druckwellen reduziert.

Die US 5 756 945 A zeigt einen Resonator zur Reduzierung der Geräuschemission in einer Ansaugleitung einer Kraftfahrzeug-Brennkraftmaschine. Der bekannte Resonator zeichnet sich dadurch aus, dass der gesamte Volumenstrom der Ansaugleitung in den Resonatorraum des Resonators geleitet wird. Hierzu ist eine von einem Luftfilter kommende erste Luftleitung vorgesehen, die durch eine Lufteintrittsöffnung in das Gehäuse geführt ist und offen in dem Resonatorraum endet. Mit Abstand zu dieser ersten Luftleitung ist der Mündungsbereich einer zweiten Luftleitung innerhalb des Resonatorraums angeordnet. Diese zweite Luftleitung führt durch eine Luftaustrittsöffnung im Gehäuse unmittelbar zur Brennkraftmaschine. Nachteilig bei dem bekannten Resonator ist ebenfalls der große Raumbedarf des Resonators.

### Offenbarung der Erfindung

Der Erfindung liegt die Aufgabe zugrunde, einen Resonator sowie ein Ansaugleitung-Resonator-Zusatzaggregat-System vorzuschlagen, mit welchem der begrenzte Bauraum im Brennkraftmaschinenbereich eines Kraftfahrzeugs besser ausgenutzt wird.

Diese Aufgabe wird durch einen Resonator mit den Merkmalen des Anspruchs 1 bzw. durch Ansaugleitung-Resonator-Zusatzaggregat-System mit den Merkmalen des Anspruchs 9 gelöst.

Erfindungsgemäß ist vorgesehen, dass dem Resonator nicht nur die Funktion als Schalldämpfer, sondern gleichzeitig die Funktion als Luftverteiler zukommt. Die über eine Lufteintrittsöffnung aus der Ansaugleitung einer Kraftfahrzeug-Brennkraftmaschine in den Resonatorraum gelangende Frischluft wird über eine von der Lufteintrittsöffnung beabstandete Luftaustrittsöffnung des Resonatorraums zu einem Zusatzaggregat, insbesondere einem Luftpresser, geleitet. Hierdurch kann auf separate Versorgungsleitungen für das Zusatzaggregat verzichtet werden, wodurch wiederum der begrenzt zur Verfügung stehende Bauraum optimal ausgenutzt wird. Gleichzeitig ergibt sich ein weiterer überraschender positiver Effekt. Der Resonator dient nicht mehr nur als Schalldämpfer für die Ansaugleitung, sondern dämpft gleichzeitig auch Vibrationen und damit Geräuschemissionen für die das Zusatzaggregat, insbesondere der Luftpresser, ursächlich ist. Luftpresser werden üblicherweise zur Bereitstellung von Druckluft für Druckluftanlagen, wie beispielsweise Druckluftbremslangen in Lastkraftwagen, eingesetzt. Da als Luftpresser häufig Kolbenverdichtermaschinen zum Einsatz kommen, ist ohne die Schalldämpferfunktion mit erheblichen Geräuschemission zu rechnen.

Bei dem erfindungsgemäßen Ansaugleitung-Resonator-Zusatzaggregat-System ist mindestens ein Resonator vorgesehen, der eine Luftaustrittsöffnung aufweist, die mit der Ansaugleitung eines Zusatzaggregats, insbesondere eines Luftpressers, verbunden ist. Die Lufteintrittsöffnung des Resonators ist mit der Ansaugleitung der Kraftfahrzeug-Brennkraftmaschine verbunden. Der Resonator ist erfindungsgemäß zwischen der Ansaugleitung und dem Zusatzaggregat eingebettet und übernimmt sowohl eine Schalldämpferfunktion für die Ansaugleitung als auch für das Zusatzaggregat und dient zusätzlich als Luftverteilungseinrichtung bzw. Luftleiteinrichtung zum Zusatzaggregat, insbesondere zum Luftpresser.

Um den vom Resonator benötigten Bauraum noch besser ausnutzen zu können, ist in Ausgestaltung der Erfindung vorgesehen, dass im Resonatorraum mindestens eine gegenüber dem Resonatorraum gasdichte Luftleitung angeordnet ist, die eine Einlassöffnung und eine Auslassöffnung im Gehäuse miteinander verbindet. Wenn die Auslassöffnung kommunizierend mit der Ansaugleitung der Kraftfahrzeug-Brennkraftmaschine in Verbindung steht, können über die Luftleitung innerhalb des Resonators beispielsweise Kurbelgehäuse-Entlüftungsgase in den Ansaugleitung abgeführt und der Brennkraftmaschine zugeleitet werden. Auf eine zusätzliche Luftleitung außerhalb des Resonators kann mit Vorteil verzichtet werden. Die Luftleitung kann beispielsweise derart angeordnet werden, dass sie auf einer Seite des Resonators durch eine Einlassöffnung hinein und durch eine beabstandete Auslassöffnung wieder herausgeführt wird. Um den Resonator jedoch als eigenständige Baugruppe im Bereich der Brennkraftmaschine ein- und wieder ausbauen zu können, ist es von Vorteil, wenn im Bereich der Einlassöffnung sowie im Bereich der Auslassöffnung Anschlüsse vorgesehen sind, um die Einlassöffnung mit einem ersten Bauteil und die Auslassöffnung mit einem zweiten Bauteil, vorzugsweise der Ansaugleitung, gasdicht und lösbar verbinden zu können. Als Kupplungsmechanismus zur Fixierung der Luftleitung an den Anschlüssen kann beispielsweise ein Rastmechanismus vorgesehen werden. Bei der zuletzt geschilderten Ausführung durchdringt die Luftleitung das Gehäuse des Resonators nicht, sondern verbindet die Einlassöffnung mit der Auslassöffnung innerhalb des Resonatorraums.

Erfindungsgemäß ist vorgesehen, dass die Einlassöffnung der Luftleitung gleichzeitig eine Auslassöffnung des Zusatzaggregats, insbesondere für Restluft, ist. Die bei dem Betrieb des Zusatzaggregats anfallende, insbesondere mit Öltröpfchen belastete, Restluft kann über die Luftleitung der Ansaugleitung der Brennkraftmaschine zugeführt werden. Insbesondere wenn als Zusatzaggregat ein Luftpresser verwendet wird entstehen ölhaltige Restgase, die in der Brennkraftmaschine verbrannt werden können.

Um möglichst nur einen Anschluss für die Abgabe von Restluft an dem Resonator sowie an der Ansaugleitung vorsehen zu müssen, ist mit Vorteil vorgesehen, dass eine gemeinsame Auslassöffnung für mehrere Luftleitungen vorgesehen ist. Mehrere, vorzugsweise sämtliche, Luftleitungen münden bei einer derartigen Ausführung in eine gemeinsame Auslassöffnung, die beispielsweise mit der Ansaugleitung der Brennkraftmaschine koppelbar ist.

Um eine möglichst rasche und einfache Montage sowie Demontage des erfindungsgemäßen Resonators zu ermöglichen, sind in Ausgestaltung der Erfindung Rastmittel zur Verrastung des Resonators an einem oder mehreren Zusatzaggregaten im Brennkraftmaschinenraum und/oder zur Verrastung an der Ansaugleitung der Kraftfahrzeug-Brennkraftmaschine vorgesehen. Mit Vorteil erfolgt die Verrastung derart, dass die Verbindung des Resonators zum Zusatzaggregat und/oder zur Ansaugleitung gasdicht erfolgt. Dichtungen zur Abdichtung der Verbindung können sowohl am Resonatorgehäuse, als auch am Zusatzaggregat oder an der Ansaugleitung vorgesehen sein. Durch die erfindungsgemäße Ausgestaltung des Resonators ist es möglich, den Resonator auf einfache Weise an dem Zusatzaggregat, insbesondere dem Luftpresser, oder an der Ansaugleitung, anzukoppeln.

Um den notwendigen Anpressdruck zur Herstellung einer gasdichten Verbindung bereitzustellen, ist mit Vorteil vorgesehen, dass die Rastmittel im Bereich der Lufteintrittsöffnung und/oder der Luftaustrittsöffnung angeordnet sind, insbesondere konzentrisch um diese herum. Zusätzlich oder alternativ können Rastmittel auch im Bereich der Lufteinlassöffnung und/oder der Luftauslassöffnung vorgesehen sein.

Damit der grundsätzliche Aufbau des Resonators, unabhängig davon ob eine oder mehrere Luftleitungen vorgesehen werden sollen, beibehalten werden kann, ist in Ausgestaltung der Erfindung vorgesehen, dass eine Verschlusskappe für die nicht benötigte Austrittsöffnung des Resonatorraums vorgesehen ist. Dies ist beispielsweise für den Anwendungsfall relevant, dass das gleiche Resonatorgehäuse in Kraftfahrzeugen mit einem oder mit zwei Luftpressern eingesetzt werden soll. Wird der erfindungsgemäße Resonator mit nur einem Luftpresser verwendet, so kann die nicht benötigte Luftaustrittsöffnung des Resonatorraums mit einer Verschlusskappe versehen werden. Alternativ oder zusätzlich hierzu können Verschlussklappen für nicht benötigte Lufteinlass- oder Luftauslassöffnungen vorgesehen werden.

In Ausgestaltung der Erfindung ist vorgesehen, dass die Lufteintrittsöffnung nicht unmittelbar in den Resonatorraum mündet, sondern dass die Lufteintrittsöffnung innerhalb des Resonatorraums in einen Anschlussstutzen zum Anschluss mindestens eines Rohres oder unmittelbar in ein Rohr mündet. Das Rohr bildet die Resonanzstrecke des Resonators oder ist zumindest Teil derselben. Um den zur Verfügung stehenden Resonatorraum innerhalb des Gehäuses optimal ausnutzen zu können, ist das Rohr mit Vorteil gebogen ausgeführt.

In Weiterbildung der Erfindung ist vorgesehen, dass an den Anschlussstutzen ein, vorzugsweise gebogenes, in den Resonatorraum mündendes, Rohr angeschlossen ist.

Gemäß einer weiteren vorteilhaften Ausgestaltung der Erfindung ist vorgesehen, dass eine Stützkontur für das Resonatorrohr vorgesehen ist. Diese Stützkontur ist vorzugsweise an dem Anschlussstutzen für das Rohr angeformt und erstreckt sich bis zur Rohrmündung. Hierdurch werden unerwünschte Rohrschwingungen vermieden.

### Kurze Beschreibung der Zeichnungen

Weitere Vorteile und zweckmäßige Ausführungen der Erfindung sind den Unteransprüchen, der Figurenbeschreibung und den Zeichnungen zu entnehmen.

Es zeigen:
- Fig. 1: fünf klapprichtige Darstellungen eines Resonators mit einer Lufteintrittsöffnung und zwei Luftaustrittsöffnungen, die gleichzeitig Ansaugöffnungen eines Zusatzaggregates sind,
- Fig. 2: eine Darstellung eines Resonators mit geöffnetem Gehäuse, wobei innerhalb des Resonatorraums zwei Luftleitungen für Restluft angeordnet sind,
- Fig. 3: eine Darstellung eines Resonators mit geöffnetem Gehäuse, wobei innerhalb des Resonatorraums nur eine Luftleitung für Restluft angeordnet ist,
- Fig. 4: eine Darstellung eines Resonators in Einbaulage, verrastet auf zwei beabstandeten Luftpressern,
- Fig. 5: eine Darstellung einer Ansaugleitung mit Anschlüssen zum Anschluss an einen Resonator und
- Fig. 6: eine Schnittdarstellung der Ansaugleitung gemäß Fig. 5.

### Ausführungsform(en) der Erfindung

In den Figuren sind gleiche Bauteile oder Bauteile mit gleicher Funktion mit gleichen Bezugszeichen gekennzeichnet.

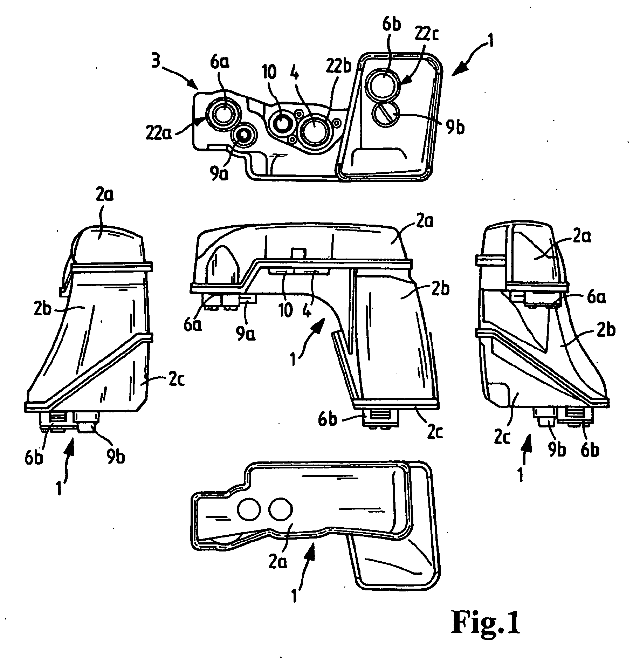

In Fig. 1 ist ein Resonator 1 in fünf verschiedenen, klapprichtigen Ansichten dargestellt. Beim dem gezeigten Resonator 1 handelt es sich um einen Helmholtz-Resonator. Der Resonator 1 weist ein dreiteiliges Gehäuse 2 mit einem Gehäuseoberteil 2a, einem Gehäusemittelteil 2b und einem Gehäuseunterteil 2c auf. Die drei Gehäuseteile 2a, 2b, 2c sind luftdicht, insbesondere durch schweißen, miteinander verbunden. Da das Gehäuse aus drei einzelnen Teilen zusammengesetzt ist, kann durch den Austausch eines einzelnen Teils der Resonator 1 an diverse Einbauanforderungen angepasst werden. Vorzugsweise kann der Resonator durch den modularen Aufbau an diverse Motorvarianten angepasst werden. Die mittlere Ansicht zeigt den Resonator 1 in einer Seitenansicht. Zu erkennen ist die in der Seitenansicht im Wesentlichen L-förmige Ausgestaltung des Resonators 1.

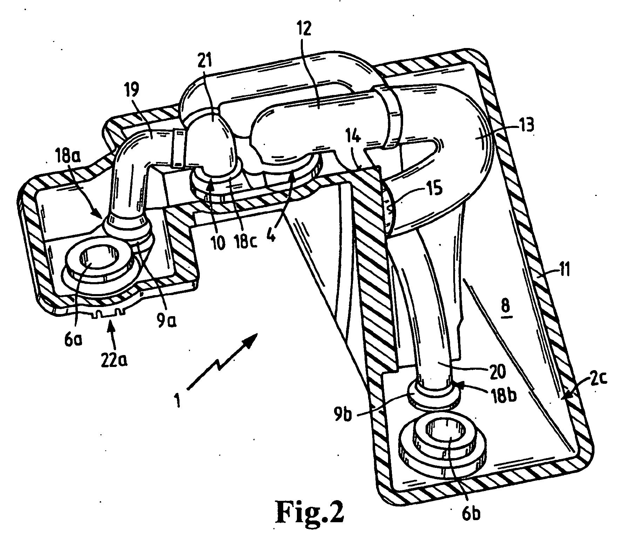

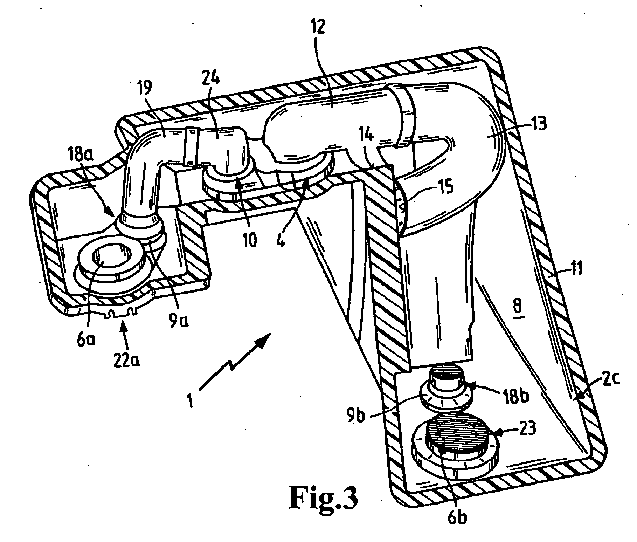

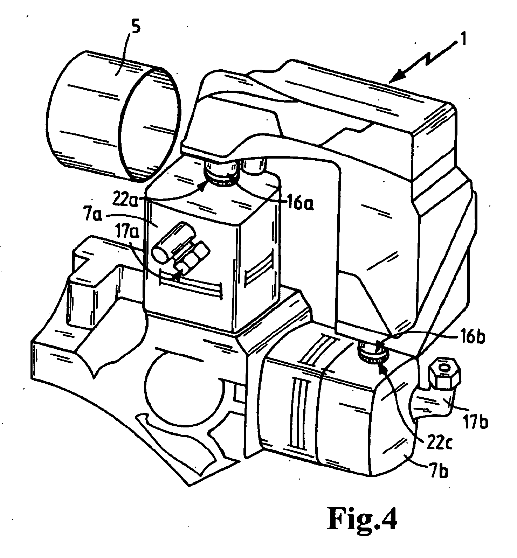

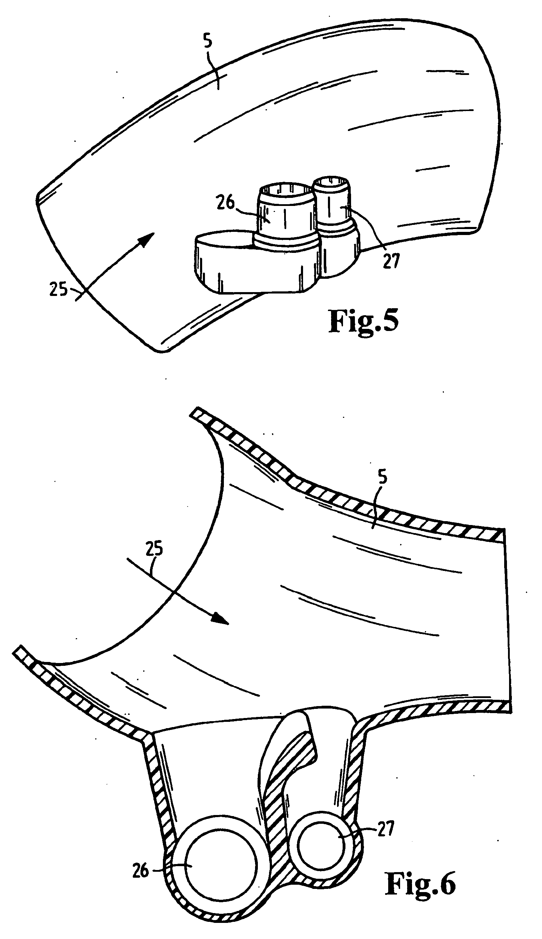

Die in der Zeichnungsebene obere Ansicht zeigt eine Unterseite 3 des Resonators 1. In die Unterseite 3 mündet eine Lufteintrittsöffnung 4 für Frischluft, welche mit der in den Fig. 5 und Fig. 6 dargestellten Ansaugleitung 5 einer nicht dargestellten Brennkraftmaschine kommuniziert. Weiterhin sind an der Unterseite 3 des Resonators 1 eine erste Luftaustrittsöffnung 6a und eine davon beabstandete, zweite Luftaustrittsöffnung 6b vorgesehen. Die erste und die zweite Luftaustrittsöffnung 6a, 6b sind gleichzeitig Ansaugöffnungen der in Fig. 4 dargestellten Luftpresser 7a und 7b. Durch die einzige Lufteintrittsöffnung 4 strömt Frischluft von der Ansaugleitung 5 in einen in den Fig. 2 und Fig. 3 gezeigten, von dem Gehäuse 2 umschlossenen Resonatorraum 8 und gelangt über die Luftaustrittsöffnungen 6a, 6b zu den Luftpressern 7a, 7b. Wichtig für die Funktionsweise des Resonators 1 ist es, dass die Lufteintrittsöffnung 4 mit genügend großem Abstand zu den Luftaustrittsöffnungen 6a, 6b innerhalb des Resonatorraums 8 angeordnet ist. Der Resonator 1 hat aufgrund der gezeigten Konfiguration zum einen die Aufgabe der Herabsetzung von Vibrationen in der Ansaugleitung 5 und zum anderen die Funktion eines Luftverteilers für die Luftpresser 7a, 7b. Gleichzeitig fungiert der Resonator 1 als Schalldämpfer für den ersten und den zweiten Luftpresser 7a, 7b.

Weiterhin sind auf der Unterseite 3 des Resonators 1 eine erste und eine zweite Lufteinlassöffnung 9a und 9b für Restluft vorhanden. Zusätzlich ist eine gemeinsame Luftauslassöffnung 10 für Restluft unmittelbar neben der Lufteintrittsöffnung 4 für Frischluft vorgesehen. Die Lufteinlassöffnungen 9a und 9b für Restluft sind gleichzeitig Luftauslassöffnungen der Luftpresser 7a, 7b. Die in die Lufteinlassöffnungen 9a und 9b eingebrachte, ölbelastete Restluft wird über die Luftauslassöffnung 10 der Ansaugleitung 5 zugeführt und damit in die Brennkraftmaschine geleitet.

In Fig. 2 ist lediglich das Gehäuseunterteil 2c des Gehäuses 2 gezeigt, so dass ein Blick auf das Innenleben des Resonators 1 möglich ist. Die Kontaktfläche 11 des Gehäuseunterteils 2c zur Anlage an dem Gehäusemittelteil 2b ist schraffiert dargestellt. Hier handelt es sich im dargestellten Ausführungsbeispiel nicht um eine Schnittfläche. Selbstverständlich könnten das Gehäuseunterteil 2c und das Gehäusemittelteil 2b einstückig ausgebildet werden. In diesem Fall würde es sich bei der Kontaktfläche 11 um eine Schnittfläche handeln. Die beschriebene Gehäusekonfiguration mit drei Gehäuseteilen 2a, 2b, 2c hat jedoch gegenüber einer nur zweiteiligen Ausführung den Vorteil, dass der Resonatorraum 8 zur Bestückung mit verschiedenen Bauteilen gut zugänglich ist.

Zu erkennen ist, dass die Lufteintrittsöffnung 4 sowie die erste Luftaustrittsöffnung 6a als auch die zweite Luftaustrittsöffnung 6b auf de Unterseite 3 des Resonators 1 angeordnet sind. Ebenso verhält es sich mit der ersten und der zweiten Lufteinlassöffnung 9a und 9b für Restluft. Die Luftauslassöffnung 10 für Restluft ist ebenfalls auf der Unterseite 3 des Resonators 1 angeordnet. Sie befindet sich in unmittelbarer Nachbarschaft zur Lufteintrittsöffnung 4 für Frischluft. Die erste Lufteinlassöffnung 9a ist unmittelbar neben der ersten Luftaustrittsöffnung 6a angeordnet. Ebenfalls nebeneinander befinden sich die zweite Luftaustrittsöffnung 6b und die zweite Lufteinlassöffnung 9b. Diese Anordnung hat den Vorteil, dass die erste Luftaustrittsöffnung 6a sowie die erste Lufteinlassöffnung 9a auf mit einem gemeinsamen Kupplungsstück mit dem Luftpresser 7a (vgl. Fig. 4) und die zweite Luftaustrittsöffnung 6b sowie die zweite Lufteinlassöffnung 9b mit einem gemeinsamen Kupplungsstück mit dem zweiten Luftpresser 7b (vgl. Fig. 4) gekoppelt werden können.

Die Frischluft gelangt über die Lufteintrittsöffnung 4 in einen Anschlussstopfen 12, der die Frischluft in der Zeichnungsebene nach rechts leitet. An den Anschlussstutzen 12 ist ein gebogenes Rohr 13 angeschlossen. Das Rohr endet innerhalb des Resonatorraums 8 mit geringem Abstand zum Gehäuseunterteil 2c. Das Rohr 13 ist Teil der Resonanzstrecke des Resonators 1. Zur Stabilisierung der Verbindung zwischen Rohr 13 und Anschlussstutzen 12 sowie zur Vermeidung von nicht erwünschten Schwingungen des Rohres 13 ist eine Stützkontur 14 vorgesehen, die mit ihrem einen Ende an den Anschlussstutzen 12 angeformt ist und mit ihrem gegenüberliegenden Ende die Mündung 15 des Rohres 13 stützt. Die durch die Mündung 15 in den Resonatorraum 8 gelangende Frischluft gelangt über die erste und die zweite Luftaustrittsöffnung 6a und 6b unmittelbar in Ansaugkanäle 16a und 16b der Luftpresser 7a und 7b (vgl. Fig. 4). Die Luftpresser 7a und 7b verdichten diese Frischluft und führen sie über Anschlussleitungen 17a, 17b einem nicht gezeigten Druckluftsystem des Kraftfahrzeugs zu.

Um die erste Lufteinlassöffnung 9a für Restluft herum ist ein erster Anschluss 18a für eine Luftleitung 19 angeordnet. Die Luftleitung 19 ist gasdicht mit dem ersten Anschluss 18a verbunden. Um die zweite Lufteinlassöffnung herum ist ein zweiter Anschluss 18b zum Anschluss einer Luftleitung 20 vorgesehen. Die Luftleitung 20 ist ebenfalls gasdicht mit dem zweiten Anschluss 18b verbunden. Beide Luftleitungen 19, 20 münden in ein Vereinigungsstück 21, welches beide Restluftströme vereinigt und der gemeinsamen Luftauslassöffnung 10 zuführt. Das Vereinigungsstück 21 sitzt auf einem dritten Anschluss 18c, welcher um die gemeinsame Luftauslassöffnung 10 herum angeordnet ist. Wie bereits erwähnt, ist die Luftauslassöffnung 10 mit der Ansaugleitung 5 gekoppelt, so dass die ölhaltige Restluft in den Ansaugleitung 5 abgeführt werden kann.

Zur Befestigung des Resonators 1 im Brennkraftmaschinenraum sind erste, zweite und dritte Rastmittel 22a, 22b, 22c vorgesehen, die konzentrisch um die erste Luftaustrittsöffnung 6a, die Lufteintrittsöffnung 4 sowie die zweie Luftaustrittsöffnung 6b angeordnet sind. Die ersten und die dritten Rastmittel 22a, 22c dienen zur Verrastung des Resonators 1 an den in Fig. 4 gezeigten Luftpressern 7a, 7b. Mittels der zweiten Rastmittel 22b ist der Resonator 1 an der Ansaugleitung 5 lösbar festlegbar.

Im Folgenden wird das in Fig. 3 gezeigte Ausführungsbeispiel des Resonators 1 beschrieben. Hierbei wird lediglich auf die Unterschiede zum dem in Fig. 2 dargestellten Ausführungsbeispiel eingegangen. Bezüglich der Gemeinsamkeiten zwischen dem in Fig. 3 dargestellten Ausführungsbeispiel und dem in Fig. 2 gezeigten Ausführungsbeispiel wird auf die Beschreibung des Ausführungsbeispiel gemäß Fig. 2 verwiesen. Im Gegensatz zu dem in Fig. 2 gezeigten Ausführungsbeispiel ist die zweite Luftaustrittsöffnung 6b mittels einer Verschlusskappe 23 gasdicht verschlossen. Ebenso ist der zweite Anschluss 18b abgedichtet. Es ist zu erkennen, dass lediglich eine einzige Luftleitung 19 vorgesehen ist, die die erste Lufteinlassöffnung 9a für Restluft mit der Luftauslassöffnung 10 verbindet. Anstelle des Vereinigungsstücks 21 ist ein gekrümmtes Kopplungsstück 24 vorgesehen. Auf die Luftleitung 20 konnte bei dem in Fig. 3 gezeigten Ausführungsbeispiel verzichtet werden. Ansonsten entspricht der Aufbau des in Fig. 3 gezeigten Ausführungsbeispiels dem in Fig. 2 dargestellten Ausführungsbeispiel. Der Resonator 1 gemäß Fig. 3 eignet sich zum Einsatz in Kraftfahrzeugen, die nur einen Luftpresser benötigen. Da die zweite Luftaustrittsöffnung 6b und die zweite Lufteinlassöffnung 9b für Restluft nicht benötigt werden, sind diese, wie beschrieben, verschlossen. Hierdurch ist es möglich, ein- und dasselbe Resonatorgehäuse 2 für unterschiedliche Anwendungen zu verwenden. Es müssen lediglich kleinere Konfigurationsänderungen am Innenleben des Resonators 1 vorgenommen werden.

In Fig. 4 ist der Resonator 1 im eingebauten Zustand dargestellt. Zu erkennen ist die dichte Verrastung mit den Luftpressern 7a und 7b mittels der ersten und dritten Rastmittel 22a, 22c. Die Lage der Ansaugleitung 5 ist angedeutet. Die Verbindung zur Ansaugleitung 5 ist in Fig. 4 aus Übersichtlichkeitsgründen nicht dargestellt. Aufgrund der Verwendung der Rastmittel 22a, 22c ist eine einfache Montage sowie Demontage des Resonators 1 sichergestellt.

In Fig. 5 ist ein Ausschnitt der Ansaugleitung 5 gezeigt. Der Pfeil 25 symbolisiert die Strömungsrichtung der angesaugten Frischluft. Zu erkennen sind ein erster Anschlussstutzen 26 und ein unmittelbar benachbarter zweiter Anschlussstutzen 27. Der erste Anschlussstutzen 26 dient zum Anschluss der Lufteintrittsöffnung 4 des Resonators 1. Der zweite Anschlussstutzen 27 dient zum Anschluss der gemeinsamen Luftauslassöffnung 10 für Restluft. Es ist zu erkennen, dass der zweite Anschlussstutzen 27 für die Restluft luftstromabwärts von dem ersten Anschlussstutzen 26 für die Zuführung von Frischluft in den Resonatorraum 8 angeordnet ist. Hierdurch wird vermieden, dass ölbelastete Restluft in den Resonator 1 gelangt.

Wie in Fig. 6 zu erkennen ist, erfolgt die Anströmung von Frischluft in den ersten Anschlussstutzen 26 radial. Die Frischluft wird dann um 90° (in Fig. 6 senkrecht zur Zeichnungsebene) in Richtung Resonator 1 umgeleitet. Die Abströmung von Restluft in den Ansaugleitung 5 erfolgt ebenfalls radial. Zuvor wird die Restluft um 90° umgelenkt.

## Patentansprüche

1. Resonator (1) für ein Lufteinlasssystem einer Kraftfahrzeug-Brennkraftmaschine, mit einem Gehäuse (2) und mit mindestens einem von dem Gehäuse (2) umschlossenen Resonatorraum (8), wobei in dem Gehäuse (2) mindestens eine Lufteintrittsöffnung (4) und mindestens eine Luftaustrittsöffnung (6a, 6b) für den Resonatorraum (8) vorgesehen sind, **dadurch gekennzeichnet, dass** die über die Lufteintrittsöffnung (4) aus einer Ansaugleitung (5) einer KraftfahrzeugBrennkraftmaschine in den Resonatorraum (8) gelangende Frischluft über die von der Lufteintrittsöffnung (4) beabstandete Luftaustrittsöffnung (6a, 6b) des Resonatorraums (8) zu einem Zusatzaggregat (7a, 7b) geleitet wird, wobei die Luftaustrittsöffnung (6a, 6b) des Resonatorraums (8) gleichzeitig eine Ansaugöffnung des Zusatzaggregates (7a, 7b) insbesondere eines Luftpressers (7a, 7b), ist, wobei im Resonatorraum (8) mindestens eine gegenüber dem Resonatorraum (8) gasdichte Luftleitung (19, 20), insbesondere für Restluft, angeordnet ist, die eine Lufteinlassöffnung (9a, 9b) und eine Luftauslassöffnung (10) innerhalb des Gehäuse (2) miteinander verbindet, wobei die Lufteinlassöffnung (9a, 9b) der Luftleitung (19, 20) gleichzeitig eine Luftauslassöffnung des Zusatzaggregates (7a, 7b) ist, wobei die Luftauslassöffnung (10) der Luftleitung (19, 20) in eine Ansaugleitung (5) einer Kraftfahrzeug-Brennkraftmaschine mündet.

2. Resonator nach Anspruch 1, **dadurch gekennzeichnet, dass** eine gemeinsame Auslassöffnung (10) für mehrere Luftleitungen (19, 20) vorgesehen ist.

3. Resonator nach einem der vorhergehenden Ansprüche, **dadurch gekennzeichnet, dass** Rastmittel (22a, 22c) zur, insbesondere gasdichten, Verrastung des Resonators (1) an dem Zusatzaggregat (7a, 7b) und/oder zur, insbesondere gasdichten, Verrastung des Resonators (1) an der Ansaugleitung (5) einer Kraftfahrzeug-Brennkraftmaschine, vorgesehen ist.

4. Resonator nach Anspruch 3, **dadurch gekennzeichnet, dass** die Rastmittel (22a, 22b, 22c) im Bereich der Lufteintrittsöffnung (4) und/oder der Luftaustrittsöffnung (6a, 6b) angeordnet sind, insbesondere konzentrisch um diese herum.

5. Resonator nach einem der vorhergehenden Ansprüche, **dadurch gekennzeichnet, dass** eine, vorzugsweise abnehmbare, Verschlusskappe (23) zum Verschließen der Luftaustrittsöffnung (6a, 6b) des Resonatorraums (8) vorgesehen ist.

6. Resonator nach einem der vorhergehenden Ansprüche, **dadurch gekennzeichnet, dass** die Lufteintrittsöffnung (4) innerhalb des Resonatorraums (8) in einen Anschlussstutzen (12) zum Anschluss eines Rohres (13) oder unmittelbar in ein, insbesondere gebogenes, Rohr (13) mündet, welches wiederum in den Resonatorraum (8) mündet.

7. Resonator nach Anspruch 6, **dadurch gekennzeichnet, dass** an dem Anschlussstutzen ein, vorzugsweise gebogenes, in den Resonatorraum (8) mündendes Rohr (13) befestigt ist.

8. Resonator nach einem der vorhergehenden Ansprüche, **dadurch gekennzeichnet, dass** eine Stützkontur (14) für das Rohr (13) vorgesehen ist.

9. Ansaugleitung-Resonator-Zusatzaggregat-System für Kraftfahrzeug-Brennkraftmaschinen mit mindestens einem Zusatzaggregat, insbesondere einem Luftpresser (7a, 7b), und einem Resonator (1) nach einem der vorhergehenden Ansprüche.

## Claims

1. Resonator (1) for an air inlet system for the internal combustion engine of a motor vehicle, with a housing (2) and with at east one resonator chamber (8) enclosed by the housing (2), at least one air inlet port (4) and at least one air outlet port (6a, 6b) for the resonator chamber (8) being provided in the housing (2), **characterized in that** the fresh air reaching the resonator chamber (8) via the air inlet port (4) from an intake manifold (5) of the internal combustion engine of a motor vehicle is led to an ancillary system (7a, 7b) via the air outlet port (6a, 6b) spaced from the air inlet port (4) of the resonator chamber (8), the air outlet port (6a, 6b) of the resonator chamber (8) being also an intake port of the ancillary system (7a, 7b), in particular of an air compressor (7a, 7b), at least one air duct (19, 20), in particular for residual air, gas-tight in relation to the resonator chamber (8), being disposed in the resonator chamber (8) which connects an air inlet port (9a, 9b) and an air outlet port (10) with each other in the housing (2), the air inlet port (9a, 9b) of the air duct (19, 20) being also an air outlet port of the ancillary system (7a, 7b), the air outlet port (10) of the air duct (19, 20) leading into an intake port (5) of the internal combustion engine of a motor vehicle.

2. Resonator according to claim 1, **characterized in that** a common outlet port (10) for several air ducts (19, 20) is provided.

3. Resonator according to one of the above claims, **characterized in that** latching means (22a, 22c) for an in particular gas-tight latching of the resonator (1) to the ancillary system (7a, 7b) and/or for an in particular gas-tight latching of the resonator (1) to the intake manifold (5) of the internal combustion engine of a motor vehicle is provided.

4. Resonator according to claim 3, **characterized in that** the latching means (22a, 22b, 22c) are disposed in the area of the air inlet port (4) and/or the air outlet port (6a, 6b), in particular concentrically around these ports.

5. Resonator according to one of the above claims, **characterized in that** a preferably removable cap (23) for closing the air outlet port (6a, 6b) of the resonator chamber (8) is provided.

6. Resonator according to one of the above claims, **characterized in that** the air inlet port (4) leads within the resonator chamber (8) into a connecting branch (12) for connecting a pipe (13) or immediately into an in particular bent pipe (13) which, in turn, leads into the resonator chamber (8).

7. Resonator according to claim 6, **characterized in that** a preferably bent pipe (13) leading into the resonator chamber (8) is attached to the connecting branch.

8. Resonator according to one of the above claims, **characterized in that** a support contour (14) for the pipe (13) is provided.

9. System of intake manifold, resonator, and ancillary system for internal combustion engines for motor vehicles with at least one ancillary system, in particular an air compressor (7a, 7b), and a resonator (1) according to one of the above claims.

## Revendications

1. Résonateur (1) pour un système d'introduction d'air d'un moteur à combustion interne de véhicule automobile, avec un boîtier (2) et avec au moins une chambre de résonance (8) entourée du boîtier (2), au moins une ouverture d'entrée d'air (4) et au moins une ouverture de sortie d'air (6a, 6b) pour la chambre de résonance (8) étant prévues dans le boîtier (2), **caractérisé en ce que** l'air frais arrivant par l'ouverture d'entrée d'air (4) en provenance d'un conduit d'aspiration (5) d'un moteur à combustion interne de véhicule automobile et pénétrant dans la chambre de résonance (8) est acheminé par l'intermédiaire de l'ouverture de sortie d'air (6a, 6b) de la chambre de résonance (8), laquelle est espacée de l'ouverture d'entrée d'air (4), vers un groupe additionnel (7a, 7b), l'ouverture de sortie d'air (6a, 6b) de la chambre de résonance (8) étant simultanément une ouverture d'aspiration du groupe additionnel (7a, 7b), notamment d'un compresseur pneumatique (7a, 7b), au moins un conduit d'air (19, 20), notamment pour l'air résiduel, étanche aux gaz par rapport à la chambre de résonance (8) étant disposé dans la chambre de résonance (8) et reliant l'une à l'autre une ouverture d'entrée d'air (9a, 9b) et une ouverture de sortie d'air (10) à l'intérieur du boîtier (2), l'ouverture d'entrée d'air (9a, 9b) du conduit d'air (19, 20) étant simultanément une ouverture de sortie d'air du groupe additionnel (7a, 7b), l'ouverture de sortie d'air (10) du conduit d'air (19, 20) aboutissant à un conduit d'aspiration (5) d'un moteur à combustion interne de véhicule automobile.

2. Résonateur selon la revendication 1, **caractérisé en ce qu'**une ouverture de sortie (10) commune est prévue pour plusieurs conduits d'air (19, 20).

3. Résonateur selon l'une des revendications précédentes, **caractérisé en ce que** des éléments encliquetables (22a, 22c) sont prévus en vue de l'enclenchement, notamment étanche aux gaz, du résonateur (1) sur le groupe additionnel (7a, 7b) et/ou en vue de l'enclenchement, notamment étanche aux gaz, du résonateur (1) sur le conduit d'aspiration (5) d'un moteur à combustion interne de véhicule automobile.

4. Résonateur selon la revendication 3, **caractérisé en ce que** les éléments encliquetables (22a, 22b, 22c) sont disposés à proximité de l'ouverture d'entrée d'air (4) et/ou de l'ouverture de sortie d'air (6a, 6b), notamment de manière concentrique autour de ces ouvertures.

5. Résonateur selon l'une des revendications précédentes, **caractérisé en ce qu'**un capuchon de fermeture (23), de préférence démontable, destiné à obturer l'ouverture de sortie d'air (6a, 6b) de la chambre de résonance (8) est prévu.

6. Résonateur selon l'une des revendications précédentes, **caractérisé en ce que** l'ouverture d'entrée d'air (4) aboutit, à l'intérieur de la chambre de résonance (8), dans une tubulure de raccord (12) permettant de raccorder un tube (13) ou directement dans un tube (13), notamment courbé, lequel aboutit pour sa part dans la chambre de résonance (8).

7. Résonateur selon la revendication 6, **caractérisé en ce qu'**un tube (13), de préférence courbé, aboutissant dans la chambre de résonance (8) est fixé à la tubulure de raccord.

8. Résonateur selon l'une des revendications précédentes, **caractérisé en ce qu'**un contour d'appui (14) est prévu pour le tube (13).

9. Système avec conduit d'aspiration, résonateur et groupe additionnel pour des moteurs à combustion interne de véhicules automobiles, avec au moins un groupe additionnel, notamment un compresseur pneumatique (7a, 7b), et un résonateur (1) selon l'une des revendications précédentes.
